# EUROPEAN PATENT SPECIFICATION

(11) **EP 3 385 229 B1**
(45) Date of publication and mention of the grant of the patent: **27.05.2020**
(21) Application number: 18165797.4
(22) Date of filing: 04.04.2018
(51) Int. Cl.: C02F 1/24, C02F 1/44, C02F 1/52, C02F 1/56, C02F 1/78, C02F 11/12, C02F 1/467, C02F 9/00, C02F 103/06, C02F 11/14

(54) **SANITARY LANDFILL LEACHATE TREATMENT PROCESS BY CATALYTIC OXIDATION AND AMMONOLYSIS**
SANITÄTISCHE DEPONIESICKERWASSERBEHANDLUNG DURCH KATALYSIERTE OXIDATION UND AMMONOLYSE
PROCESSUS DE TRAITEMENT DE LIXIVIATION D'UN DÉCHARGE SANITAIRE PAR OXYDATION CATALYTIQUE ET AMMONOLYSE

(30) Priority: 04.04.2017 BR 10201706907
(43) Date of publication of application: 10.10.2018
(73) Proprietor: Kudrjawzew, Vladimir, CEP 05351-025 Sao Paulo (BR)
(72) Inventor: Kudrjawzew, Vladimir, CEP 05351-025 Sao Paulo (BR)
(74) Representative: Lourenço Martinho do Rosário, Ana Margarida

(56) References cited:
- AMOKRANE A ET AL: "Landfill leachates pretreatment by coagulation-flocculation", WATER RESEARCH, ELSEVIER, AMSTERDAM, NL, vol. 31, no. 11, 1 November 1997 (1997-11-01), pages 2775-2782, XP004094222, ISSN: 0043-1354, DOI: 10.1016/S0043-1354(97)00147-4
- A.C. SILVA ET AL: "Treatment and detoxification of a sanitary landfill leachate", CHEMOSPHERE., vol. 55, no. 2, 1 April 2004 (2004-04-01), pages 207-214, XP055478622, GB ISSN: 0045-6535, DOI: 10.1016/j.chemosphere.2003.10.013
- DENG ET AL: "Electrochemical oxidation for landfill leachate treatment", WASTE MANAGEM, ELSEVIER, NEW YORK, NY, US, vol. 27, no. 3, 12 January 2007 (2007-01-12), pages 380-388, XP005827869, ISSN: 0956-053X

## Description

### TECHNICAL FIELD

The present patent of invention for the sanitary landfill leachate treatment process by oxyammonolysis of the physical-chemical effluent, for use in landfills; and the organic nitrogen extracted is used in composts and fertilizers; the final effluent from the treatment undergoes the process of oxidation and ammonolysis, enabling the reuse and/or disposal thereof without harming the environment.

### BACKGROUND OF THE INVENTION

The landfill leachate, popularly known as "slurry", is the product of the biological degradation of the organic part of the waste deposited in the landfill and contaminated with metals and minerals present in the waste; due to its polluting potential treatment is necessary, and the most common is its dilution with sewage for treatment at the residential sewage plant (ETE).

The landfills having treatment for leachate use biological systems (aerobics and anaerobics), physical-chemical systems (coagulation and flocculation), filtration systems (nanofiltration and reverse osmosis) to comply with environmental legislation, mainly referring to levels of BOD (Biochemical Oxygen Demand), COD (Chemical Oxygen Demand) and the concentration of Ammonium Nitrogen, wherein the federal environmental legislation concerning disposal of treated effluent may change in each state of the nation, this change may only occur in the sense of greater restriction and stricter parameters.

The dilution of the slurry with residential sewage for treatment at the sewage plants presents a number of difficulties: the biological processes employed in the ETEs are not prepared for the high loads of contaminants in the slurry, which requires large dilutions; besides not having the capacity to treat the ionic and metal loads, they are highly sensitive to the recalcitrant loads from the ammonium humates present in the slurry, the concentrations of which contaminate the body of water receiving the effluent from the treatment of the ETE.

The biological processes employed for treating slurry encounter difficulties in the high organic load present in the slurry, in the non-existence of an efficient bacteria for biological treatment, since it is a residue of the biological degradation that occurs in the landfill; although better, the aerobic systems present difficulty in the uniform distribution of oxygen so that there is no proliferation of anaerobic bacteria; additionally, the slurry load varies a lot with the rainfall patterns and the biological systems have major difficulty in monitoring these variations and no biological system is capable of treating the slurry so as to comply with environmental legislation.

When employed for the treatment of slurry the physical-chemical processes present the following difficulties: they are suitable for the suspended solids and have no effect on the dissolved solids and ionic loads present in the slurry; the need to adjust the pH of the slurry for use of the chosen flocculant/clot represents high cost and operational difficulty; the solids withdrawn in the physical-chemical processes leach again when in contact with water hinder the disposal thereof in the landfill.

When employed as treatment for the slurry, direct slurry filtration systems (nanofiltration and reverse osmosis) present the following difficulty: what was filtered, called permeate, does not comply with environmental legislation, in the case of nanofiltration, and both filtration processes present a portion of concentrated retainate, which in the case of reverse osmosis is up to 25% of the original volume of the slurry, and wherein the concentration of contaminants is 400% greater than that of the original slurry; the dispersion of the retainate in the landfill itself does not solve the problem because it leaches and percolates causing an increase in the volume and the concentration of contaminants in the slurry which is normally produced by the landfill, increasing the difficulty in treating the slurry since the contamination is neither withdrawn or transformed into another product, so there is no remedy; normally the concentrate is stored in ponds, but this is now a class I effluent with potentially greater contamination than the original slurry.

AMOKRANE A ET AL: "Landfill leachates pretreatment by coagulation-flocculation",WATER RESEARCH, ELSEVIER, AMSTERDAM, NL, vol. 31, no. 11, 1 November 1997 (1997-11-01), pages 2775-2782 discloses a method for treating landfill leachate including the steps of coagulation with ferric chloride and flocculation with anionic or cationic polymers, followed by sedimentation before further treating with Reverse Osmosis. A.C. SILVA ET AL: "Treatment and detoxification of a sanitary landfill leachate",CHEMOSPHERE., vol. 55, no. 2, 1 April 2004 (2004-04-01), pages 207-214 discloses a method for treating sanitary landfill leachate including the steps of coagulation with an inorganic salt and flocculation with a cationic polymer, followed by microfiltration and ultrafiltration. DENG ET AL: "Electrochemical oxidation for landfill leachate treatment",WASTE MANAGEM, ELSEVIER, NEW YORK, NY, US, vol. 27, no. 3, 12 January 2007 (2007-01-12), pages 380-388 discloses a method for treating sanitary landfill leachate with electrochemical oxidation for NH3-N removal, and also mentions pretreatment with coagulation.

### SUMMARY OF INVENTION

Bearing in mind these difficulties and in order to overcome them, the sanitary landfill leachate treatment process was developed by oxyammonolysis of the physical-chemical effluent, the object of the present patent, which consists of providing an economically feasible and environmentally correct treatment of the slurry, and is divided into four consecutive steps; 1^{st} physical-chemical step, which does not require a pH adjustment and whose solid withdrawn is an encapsulated metal chelate other than leached and inert matter; 2^{nd} filtration step, composed of sand filter, microfiltration (8) and nanofiltration, whose retainate is rich in humic substances; 3^{rd} catalytic oxidation step, in which the organic compounds and recalcitrant contaminants present in the permeate of the nanofiltration are oxidized and thereafter the ammonium nitrogen undergoes ammonolysis by cathodic reduction.

### BRIEF DESCRIPTION OF THE DRAWINGS

The drawings illustrate the equipment involved in the steps of the landfill leachate treatment process, the object of the present patent. The drawings are illustrations that contribute to an improved understanding of the present specification, wherein:
Figure 1 shows the equipment involved in the 1^{st} physical-chemical step;
Figure 2 shows the equipment involved in the 2^{nd} filtration step;
Figure 3 shows the equipment involved in the 3^{rd} step of catalytic oxidation and ammonolysis by cathodic reduction.

### DETAILED DESCRIPTION OF THE INVENTION

The 1^{st} step is physical-chemical and takes place in a physical-chemical reactor (1), endowed with stirrer (2) and uses a property from the humins present in the slurry, originating from the degradation of the lignin present in the waste; the slurry is pumped from the slurry pond to the physical-chemical reactor (1) until it occupies 60% of the volume thereof, adding 0.35% to 0.70%, in volume of such reactor, of ferric chloride (FeCl₃), to be defined by jar-test; Fe³⁺ chelates the humins forming organo-metals which by allosteric effect causes the chelation of other metals present in the slurry and co-adsorption to amine groups forming the clot; FeCl₃ acidifies the mediums which decomposes the carbonates (CO₃²⁻) present, with a large release of carbon gas (CO₂), which causes the formation of a foam that occupies from 20% to 30% of the volume of the physical-chemical reactor; the clot reaction takes place with fast stirring in the medium, 40 rpm on the shaft of the stirrer (2); after five minutes the flocculation reaction begins by adding 600ppm to 800ppm of flocculant anionic polymer, with slow stirring, 20 rpm on the shaft of the stirrer (2), to prevent rupture of the flakes formed, for three minutes; the flocculant anionic polymer promotes the aggregation of the clots and uptake of oils and grease, suspended solids, etc.; the final size of the flake and the final encapsulation of the contaminant is obtained by adding 600 ppm to 1000 ppm of polyacrylamide cationic flocculant polymer, with slow stirring, 20 rpm on the shaft of the stirrer (2), for three minutes; the stirrer is switched off and the system rests for forty (40) minutes; due to the formation of carbon gas, the flakes formed float promoting the separation of the medium into two phases, supernatant solids and a gold-yellow colored liquid smelling of ammonium, mainly composed of humates and fulvates having different molecular weights, of ammonium, sodium, iron and chlorides; the physical-chemical reactor (1) is unloaded onto a solid separation ramp, with a grid measuring 0.5mm, a liquid phase containing the solids under 0.5 mm that falls into the flotation tank by dissolved air (3); the centrifugal pump (4) withdraws the liquid phase from the floater; a scraper withdraws the floated solids, the solid phase of the physical-chemical reactor (1) forms a solid substrate which is taken to a dumpster for final disposal in the landfill itself; the dry solid is class II-B and not leachate.

The 2^{nd} step is that of filtration which involves a sand filter (5) for retaining coarse solids, a microfiltration (8) with polypropylene cartridges and retaining particles greater than 1 micrometer, for protecting the nanofiltration membrane (9); the post-physical-chemical (liquid phase) effluent is withdrawn from the floater by the centrifugal pump (4) passing through the sand filter (5) and up to the retainate tank (6) of the nanofiltration; a multiple-stage pump (7), having pressure of 1470000 Pa, pumps the effluent to pass through the microfiltration (8) and the nanofiltration membrane (9); the nanoretained matter returns to the retainate tank (6) and the permeate follows on to the effluent treatment step; when the temperature of the permeate at the nanofiltration outlet reaches 40°C , the pressures being maintained, the nanofiltration process will be concluded.

The concentrate from the nanofiltration is rich in humic substances which are solid conditioners for agriculture, humates and ammonium fulvate; the humic and fulvic acids belong to humins and are organic nitrogen compounds having excellent absorption by plants because they originate from the biological degradation of the organic vegetable matter present in the waste deposited in the landfill; by ionic exchange resins the traces of chloride and sodium are withdrawn from the concentrate, which is ready to be used as raw material for producing NPK fertilizer, with the addition of phosphorus (P) and potassium (K) to obtain fertilizer to recover the soils of farmable land.

The 3^{rd} treatment step, in which the effluent permeated in the nanofiltration undergoes catalytic oxidation of the organic matter having lower molecular weight in the aeration tank (12); a Venturi pump (11) injects ozone via the aeration tank (12), at the bottom of the tank there are air diffusers and a radial compressor blows the air towards the diffusers; the oxidation consists of the *in situ* production of oxygen-reactive species (ERO) such as superoxide anion radical (O₂^{•-}), hydrogen peroxide (H₂O₂), singlet dioxygen (O2), hydroxyl radical (HO•), and the effluent receives from 10 g to 20 g of O₃ (ozone) per m³ (cubic meter) of effluent to be oxidized, via Venturi pump (11), furnished by the ozone generator (10); the oxidized effluent presenting a concentration of Cl⁻ between 1000 mg/l and 2000 mg/l, of Fe³⁺ between 500 mg/l and 1500 mg/l, of Nh₄⁺ between 250 mg/l and 350 mg/l passes through the ammonolysis conduit (13) by cationic reduction.

Ammonolysis by cathodic reduction involves a ammonolysis conduit (13), circulation pump (14), press filter (15); a set of electrodes, with graphite cathode and stainless steel anode is mounted inside the conduit and the continuous current source maintains the electric potential difference between 4 volts and 6 volts in the electrodes; ammonolysis is a technique that consists of breaking the nitrogen-hydrogen bonds in the azo groups to increase the valence state of the nitrogen atom up to the formation of molecular nitrogen (N2), with release of H⁺, acidifying the medium; Fe²⁺ present in the medium acts to inhibit the reaction of nucleophilic addition of chloride in organic compounds; pursuant to the kinetic principles below:
Kinetic 1: (anode)

   Cl⁻ + H₂O ----- > ClO⁻+ 2H⁺ + 2e-;
Kinetic 2: (cathode)

   Fe²⁺ + 2 e⁻ ----- > Fe⁰;
Kinetic 3: (decomposition of the ammonium):

   3ClO⁻ + 2NH₄⁺ ---- > 3Cl⁻ + N₂ + 3H₂O+ 2H⁺;

   the electrodes have a power difference of 4v in continuous current; the cathodic ammonolysis reaction will be interrupted when the concentration of ammonium nitrogen reaches 3 mg/l; during ammonolysis the effluent is pumped to pass through a press filter, in which Fe⁰ hydrate is retained and recovered as ferric chloride by the addition of hydrochloric acid and to be re-used in the 1^{st} physical-chemical step; the effluent of the press filter (15) returns to the ammonolysis conduit.

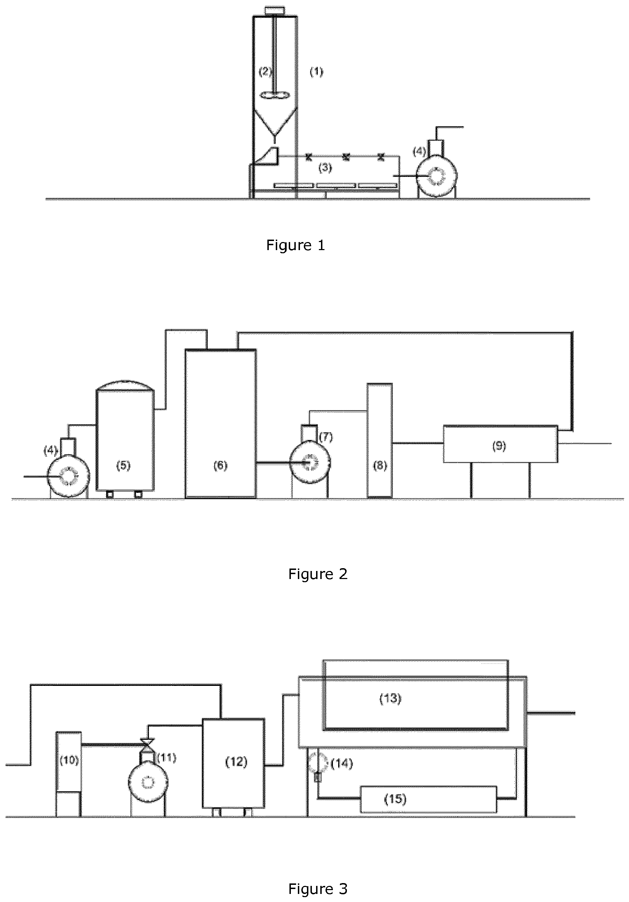

Figure 1 illustrates the equipment involved in the 1^{st} physical-chemical step; physical-chemical reactor (1), stirrer (2), flotation tank by dissolved air (3) and centrifugal pump (4).

Figure 2 illustrates the equipment involved in the 2^{nd} step of the treatment process, the filtration step; centrifugal pump (4); sand filter (5); retainate tank (6); multiple-stage pump (7); microfiltration (8); nanofiltration membrane (9).

Figure 3 illustrates the equipment involved in the 3^{rd} catalytic oxidation step and ammonolysis by cathodic reduction; aeration tank (12), ozone generator (10), Venturi pump (11), ammonolysis conduit (13), circulation pump (14) and press filter (15).

## Claims

1. Sanitary landfill leachate treatment process comprising the following consecutive steps:
(i) physico-chemical treatment of a slurry, such slurry is inserted into a stirred reactor until 60% of its volume is filled and mixed with ferric chloride from 0.35% to 0.70% by volume of the reactor, said mixture is shaken at 40 rpm for five minutes to coagulate; to the resulting coagulated mixture is added an anionic flocculating polymer, the stirring being maintained at 20 rpm for three minutes, when a cationic flocculating polymer is added and the stirring is maintained at 20 rpm for another three minutes; the resulting mixture rests for forty minutes and is then transferred to a flotation tank by dissolved air;
(ii) filtration of a liquid fraction from the flotation tank in a sand filter, followed by a microfiltration and a nanofiltration resulting in a nanofiltration permeate and a retentate of the nanofiltration;
**characterized by** the fact that it further comprises the step of:
(iii) catalytic oxidation wherein the nanofiltration permeate is transferred to an aeration tank and ozone is injected to such tank resulting in an oxidized effluent; and ammonolysis by cathodic reduction wherein the said oxidized effluent is transferred to an ammonolysis conduit where it is subjected to a to the electric potential difference until reaches the concentration of 3 mg/l of ammonium nitrogen obtaining an effluent, said effluent is then pumped to a press filter for retention of ionic residues, iron and nitrogen.

2. Sanitary landfill leachate treatment process according to claim 1, **characterized in that** in the flocculation step of the physico-chemical step is added between 600 ppm and 800 ppm of flocculant anionic polymer.

3. Sanitary landfill leachate treatment process according to claim 1, **characterized in that** the flocculation step of the physico-chemical step is added between 600 ppm and 1000 ppm of polyacrylamide cationic flocculant polymer.

4. Sanitary landfill leachate treatment process according to claim 1, **characterized in that** in the microfiltration step particles greater than 1 micrometer are retained.

5. Sanitary landfill leachate treatment process according to claim 1, **characterized in that** the retentate from nanofiltration returns to a retainate tank.

6. Sanitary landfill leachate treatment process according to claim 1, **characterized in that** the final concentrate of the nanofiltration is raw material for soil conditioners or NPK fertilizer.

7. Sanitary landfill leachate treatment process according to claim 1, **characterized in that** the aeration tank receives from 10 g to 20 g of ozone (O₃) per cubic meter (m³) of effluent to be oxidized.

8. Sanitary landfill leachate treatment process according to claim 1, **characterized in that** the passage conduit comprises electrodes having graphite cathode and stainless steel anode is mounted inside the conduit and the continuous current source maintains the electric potential difference between 4 volts and 6 volts in the electrodes.

9. Sanitary landfill leachate treatment process according to claim 1, **characterized in that** the effluent of the press filter returns to the ammonolysis conduit.

## Patentansprüche

1. Verfahren zur Behandlung von Sickerwasser von Sanitärdeponien, das in den nachstehenden aufeinanderfolgenden Schritten besteht:
(i) Chemisch-physikalische Behandlung von Schlämmen, die in einen Rührreaktor gegeben werden bis dieser zu 60% gefüllt ist und zu 0,35% bis 0,70% des Reaktorvolumens mit Eisenchlorid gemischt werden, wobei diese Mischung fünf Minuten lang bei 40 U/min gerührt wird bis sie koaguliert; zu der so gewonnenen koagulierten Mischung wird ein anionisches Flockungspolymer gegeben, wobei der Rührvorgang bei 20 U/min für drei Minuten beibehalten wird und hiernach ein kationisches Flockungspolymer hinzugefügt wird und der Rührvorgang bei 20 U/min für weitere drei Minuten beibehalten wird; die so entstandene Mischung ruht für vierzig Minuten und wird dann in ein Druckentspannungs-Flotationsbecken gegeben;
(ii) Filtration eines flüssigen Bruchteils aus dem Flotationsbecken mithilfe eines Sandfilters, gefolgt von einer Mikrofiltration und einer Nanofiltration, was zu einem Permeat der Nanofiltration und einem Retentat der Nanofiltration führt;
**dadurch gekennzeichnet, dass** es ferner den folgenden Schritt umfasst:
(iii) Katalytische Oxidation, wobei das Permeat der Nanofiltration in ein Belebungsbecken gegeben und in dieses Becken Ozon eingeleitet wird und somit oxidiertes Abwasser entsteht; und Ammonolyse durch kathodische Reduktion wobei das oxidierte Abwasser in eine Ammonolyse-Leitung geleitet wird, wo es der elektrischen Potenzialdifferenz ausgesetzt wird bis es eine Konzentration von 3 mg/l Ammoniumstickstoff erreicht und ein Abwasser gewonnen wird, das zur Retention von ionischen Rückständen, Eisen und Stickstoff durch einen Pressfilter gepumpt wird.

2. Verfahren zur Behandlung von Sickerwasser von Sanitärdeponien nach Anspruch 1, **dadurch gekennzeichnet, dass** beim Flockungsschritt des chemischphysikalischen Schritts zwischen 600 ppm und 800 ppm anionisches Flockungspolymer hinzugegeben wird.

3. Verfahren zur Behandlung von Sickerwasser von Sanitärdeponien nach Anspruch 1, **dadurch gekennzeichnet, dass** beim Flockungsschritt des chemischphysikalischen Schritts zwischen 600 ppm und 1000 ppm kationisches Polyacrylamid-Flockungspolymer hinzugegeben wird.

4. Verfahren zur Behandlung von Sickerwasser von Sanitärdeponien nach Anspruch 1, **dadurch gekennzeichnet dass** beim Schritt der Mikrofiltration Partikel mit einer Größe von über 1 Mikrometer zurückgehalten werden.

5. Verfahren zur Behandlung von Sickerwasser von Sanitärdeponien nach Anspruch 1, **dadurch gekennzeichnet dass** das Retentat der Nanofiltration in ein Rückhaltebecken zurückgeleitet wird.

6. Verfahren zur Behandlung von Sickerwasser von Sanitärdeponien nach Anspruch 1, **dadurch gekennzeichnet dass** das Endkonzentrat der Nanofiltration ein Rohmaterial für Bodenverbesserer oder NPK-Düngemittel ist.

7. Verfahren zur Behandlung von Sickerwasser von Sanitärdeponien nach Anspruch 1, **dadurch gekennzeichnet dass** in das Belebungsbecken 10 g bis 20 g Ozon (O₃) pro Kubikmeter (m³) des Abwassers eingeleitet wird, um es zu oxidieren.

8. Verfahren zur Behandlung von Sickerwasser von Sanitärdeponien nach Anspruch 1, **dadurch gekennzeichnet dass** die Durchflussleitung mit Elektroden mit Grafit-Kathoden und Edelstahl-Anoden versehen ist, die innerhalb der Leitung installiert werden und die Gleichstromquelle eine elektrische Potenzialdifferenz von zwischen 4 Volt und 6 Volt an den Elektroden aufweist.

9. Verfahren zur Behandlung von Sickerwasser von Sanitärdeponien nach Anspruch 1, **dadurch gekennzeichnet dass** das Abwasser aus dem Pressfilter in die Ammonolyse-Leitung zurückgeleitet wird.

## Revendications

1. Procédé de traitement des lixiviats de décharges sanitaires comprenant les étapes consécutives suivantes:
(i) traitement physico-chimique d'une boue, laquelle est introduite dans un réacteur agité jusqu'à ce que 60% de son volume soit rempli et mélangé avec du chlorure ferrique de 0,35% à 0,70% en volume du réacteur, ledit mélange est agité à 40 tpm pendant cinq minutes pour coaguler; un polymère de floculation anionique est ajouté au mélange coagulé résultant, l'agitation étant maintenue à 20 tpm pendant trois minutes, lorsqu'un polymère de floculation cationique est ajouté et l'agitation est maintenue à 20 tpm pendant trois minutes supplémentaires; le mélange résultant repose pendant quarante minutes et est ensuite transféré dans un réservoir de flottation par de l'air dissous;
(ii) filtration d'une fraction liquide provenant du réservoir de flottation dans un filtre à sable, suivie d'une microfiltration et d'une nanofiltration permettant d'obtenir un perméat de nanofiltration et un rétentat de la nanofiltration;
**caractérisé en ce qu'**il comprend en outre l'étape de:
(iii) oxydation catalytique dans laquelle le perméat de nanofiltration est transféré dans un réservoir d'aération, et de l'ozone est injecté dans ce réservoir, provoquant un effluent oxydé ; et ammoniolyse par réduction cathodique dans laquelle ledit effluent oxydé est transféré dans un conduit d'ammoniolyse où il est soumis à la différence de potentiel électrique jusqu'à ce qu'il atteigne la concentration de 3 mg/l d'azote ammoniacal pour obtenir un effluent, ledit effluent étant ensuite pompé vers un filtre-presse pour retenir les résidus ioniques, le fer et l'azote.

2. Procédé de traitement des lixiviats de décharges sanitaires selon la revendication 1, **caractérisé en ce que** lors de l'étape de floculation de l'étape physico-chimique, on ajoute entre 600 ppm et 800 ppm de polymère anionique floculant.

3. Procédé de traitement des lixiviats de décharges sanitaires selon la revendication 1, **caractérisé en ce que** lors de l'étape de floculation de l'étape physico-chimique, on ajoute entre 600 ppm et 1000 ppm de polymère floculant cationique polyacrylamide.

4. Procédé de traitement des lixiviats de décharges sanitaires selon la revendication 1, **caractérisé en ce que** lors de l'étape de microfiltration, des particules supérieures à 1 micromètre sont retenues.

5. Procédé de traitement des lixiviats de décharges sanitaires selon la revendication 1, **caractérisé en ce que** le rétentat provenant de la nanofiltration retourne dans un réservoir de retenue.

6. Procédé de traitement des lixiviats de décharges sanitaires selon la revendication 1, **caractérisé en ce que** le concentré final de la nanofiltration est une matière première pour des conditionneurs de sol ou un engrais NPK.

7. Procédé de traitement des lixiviats de décharges sanitaires selon la revendication 1, **caractérisé en ce que** le réservoir d'aération reçoit de 10 g à 20 g d'ozone (O₃) par mètre cube (m³) d'effluent à oxyder.

8. Procédé de traitement des lixiviats de décharges sanitaires selon la revendication 1, **caractérisé en ce que** le conduit de passage comprend des électrodes équipées d'une cathode en graphite et d'une anode en acier inoxydable installées à l'intérieur du conduit, et la source de courant continu maintient la différence de potentiel électrique entre 4 volts et 6 volts dans les électrodes.

9. Procédé de traitement des lixiviats de décharges sanitaires selon la revendication 1, **caractérisé en ce que** l'effluent du filtre-presse retourne dans le conduit d'ammoniolyse.
